Europäisches Patentamt

European Patent Office

Office européen des brevets

(19)

(11) EP 1 214 669 B1

(12) **FASCICULE DE BREVET EUROPEEN**

(45) Date de publication et mention
de la délivrance du brevet:
**20.08.2003 Bulletin 2003/34**

(21) Numéro de dépôt: **00964358.6**

(22) Date de dépôt: **22.09.2000**

(51) Int Cl.$^7$: **G06F 17/30**

(86) Numéro de dépôt international:
**PCT/FR00/02640**

(87) Numéro de publication internationale:
**WO 01/022279 (29.03.2001 Gazette 2001/13)**

(54) **PROCEDE DE CLASSIFICATION THEMATIQUE DE DOCUMENTS, MODULE DE CLASSIFICATION THEMATIQUE ET MOTEUR DE RECHERCHE INCORPORANT UN TEL MODULE**

VERFAHREN ZUR THEMATISCHEN KLASSIFIKATION VON DOKUMENTEN, MODUL ZUR THEMATISCHEN KLASSIFIKATION UND EIN DERARTIGES MODUL BEINHALTENDE SUCHMASCHINE

METHOD FOR THEMATIC CLASSIFICATION OF DOCUMENTS, THEMATIC CLASSIFICATION MODULE AND SEARCH ENGINE INCORPORATING SUCH A MODULE

(84) Etats contractants désignés:
**AT BE CH CY DE DK ES FI FR GB GR IE IT LI LU MC NL PT SE**

(30) Priorité: **24.09.1999 FR 9911973**

(43) Date de publication de la demande:
**19.06.2002 Bulletin 2002/25**

(73) Titulaire: **FRANCE TELECOM**
**75015 Paris (FR)**

(72) Inventeurs:
• **BIETTRON, Laurent**
**F-22300 Lannion (FR)**
• **PALLU, Frédéric**
**F-22560 Trebeurdern (FR)**
• **TRICOT, Sylvie**
**F-22300 Tredrez (FR)**

(74) Mandataire: **Jacobson, Claude**
**Cabinet Lavoix**
**2, Place d'Estienne d'Orves**
**75441 Paris Cedex 09 (FR)**

(56) Documents cités:
**EP-A- 0 822 503**          **WO-A-97/38382**
**US-A- 5 625 767**

• **CHEKURI C ET AL: "Web search using automatic classification" SIXTH INTERNATIONAL WORLD WIDE WEB CONFERENCE, SANTA CLARA, CALIFORNIA, [en ligne] 7 - 11 avril 1997, XP002141634 Extrait de l'Internet: <URL:http://www.scope.gmd.de/info/www6/p os ters/725/web_search.html> [extrait le 2000-06-30]**
• **CHAKRABARTI S ET AL: "Scalable feature selection, classification and signature generation for organizing large text databases into hierarchical topic taxonomies" VLDB JOURNAL, AUG. 1998, SPRINGER-VERLAG, GERMANY, vol. 7, no. 3, pages 163-178, XP002141635 ISSN: 1066-8888**

**Description**

La présente invention se rapporte à un procédé de classification thématique de documents, destiné, en particulier, à la constitution ou la mise à jour de bases de données thématiques, en particulier pour moteur de recherche.

Elle se rapporte également à un module de classification thématique de documents et à un moteur de recherche équipé d'un tel module de classification thématique.

On connaît, à ce jour, principalement deux outils informatiques permettant de rechercher des documents sur un réseau informatique, comme par exemple, le réseau Internet.

Ces outils sont le moteur de recherche et le guide.

Un moteur de recherche est un outil permettant d'extraire d'une information, principalement textuelle, les mots ou termes qui la représentent le mieux et de les stocker dans des bases de données, également connues sous l'appellation "base d'index".

De telles bases d'index sont généralement mises à jour relativement fréquemment.

En réponse à une requête formulée par un utilisateur, ce même outil parcourt les bases d'index afin d'identifier les termes les plus pertinents par rapport à ceux de la requête, puis de trier les informations à fournir en retour.

L'autre technique de recherche de documents sur un réseau informatique consiste à utiliser un guide. Cet outil propose des recherches par catégories, les pages de documents étant classées manuellement par des documentalistes.

Ces types d'outil présentent un certain nombre d'inconvénients.

Tout d'abord, les moteurs de recherche ne proposent pas de classement de pages de document par catégories. En effet, les pages fournies en réponse à une requête ne sont pas typées. Ainsi, des requêtes ambiguës peuvent donner lieu à des réponses très diverses, ressenties comme du bruit par l'utilisateur.

Les guides, au contraire, permettent de fournir à un utilisateur des réponses typées, c'est à dire portant sur le ou les mêmes thèmes que la requête.

Une autre méthode décrite dans le document US-A-5 625 767 permet une classification thématique sur la base d'une analyse statistique du document. Cependant, cette méthode requiert une classification manuelle préalable des documents.

Le classement manuel des pages de document implique de forts coûts de création et de mise à jour et ne permet l'indexation que d'un nombre limité de pages. Par conséquent, certaines requêtes n'obtiennent pas de réponse.

Le but de l'invention est de palier les inconvénients des moteurs de recherche et des guides.

Elle a donc pour objet un procédé de classification thématique de documents, notamment, pour la constitution ou la mise à jour de bases de données thématiques pour moteur de recherche, caractérisé en ce qu'il comporte les étapes suivantes :

- on sélectionne un échantillon de documents représentatifs de chaque thème ;
- on identifie, dans les documents sélectionnés, des éléments caractéristiques de chaque thème ;
- on affecte, à chaque élément identifié, un coefficient représentatif de la pertinence de cet élément vis à vis du thème correspondant ; et
- pour chaque document à classifier, on identifie lesdits éléments caractéristiques de chaque thème qu'il contient et, pour chaque thème qui leur correspond, on calcule, à partir du coefficient affecté à ces éléments, la valeur d'une caractéristique représentative de la pertinence du thème pour ce document, pour décider si ce document porte ou non sur ce thème, lesdites étapes automatiquement pour chaque document récupéré sur un réseau informatique.

On classe les documents récupérés en fonction des thèmes qui y sont abordés ; et

- l'on stocke les documents classés par thèmes dans des bases de données interrogeables à partir de thèmes contenus dans une requête ;

et en ce que l'étape d'affectation dudit coefficient à chaque élément identifié comprend les étapes suivantes, pour chaque thème :

- calcul de la fréquence de l'élément dans les documents sélectionnés portant sur ce thème ;
- calcul de la fréquence de l'élément dans les documents sélectionné ne portant pas sur ce thème ; et
- calcul du rapport entre les fréquences calculées.

On classe ainsi les documents récupérés sur un réseau informatique en fonction des thèmes qui y sont abordés et ce, de façon automatique.

Le procédé de classification selon l'invention peut en outre comporter une ou plusieurs des caractéristiques suivantes, prises isolément ou selon toutes les combinaisons techniquement possibles :

- il comporte en outre une étape de tri des thèmes selon une arborescence de thèmes et par ordre décroissant des coefficients ;
- l'étape de calcul de la caractéristique représentative de la pertinence du thème d'un document à classifier comprend les étapes suivantes pour chaque thème :

  - on lit la valeur du rapport desdites fréquences de chaque élément représentatif du thème extrait du document,
  - on multiplie les valeurs lues, et
  - on affecte le résultat de cette multiplication à la valeur de ladite caractéristique ;

- l'on décide que le document porte sur un thème si la valeur de ladite caractéristique représentative de la pertinence du thème pour ce document est supérieure à une valeur de seuil ;
- la valeur de seuil est élaborée, pour chaque thème, à partir desdits rapports de fréquence, selon la relation suivante :

$$\text{score - seuil}_{\text{thème}} = (R_{\text{moy}})\text{nthème}$$

dans laquelle :

  $\text{score - seuil}_{\text{thème}}$ désigne la valeur de seuil
  $R_{\text{moy}}$ représente la valeur moyenne des rapports de fréquences R des éléments du thème et,
  nthème désigne un nombre prédéterminé ;

- selon une variante, la valeur de seuil est réglée manuellement ;
- les étapes d'identification des éléments caractéristiques de chaque thème contenu dans un document sont réalisées au moyen d'une table de hachage ; et
- on calcule, pour chaque élément de vocabulaire d'une requête formulée par un utilisateur, des coefficients caractéristiques de l'élément par rapport à chaque thème connu et l'on associe à chaque élément les coefficients et les thèmes correspondants, de sorte que lesdits coefficients atteignent une valeur minimale.

Lors de la recherche des entrées d'index, c'est à dire au cours de la recherche des documents correspondants à la requête, il est ainsi possible d'accéder directement aux thèmes liés à chaque élément et aux coefficients correspondants que l'on combine par multiplication afin de déterminer un classement des thèmes liés à la requête entière.

L'invention a également pour objet un module de classification thématique de documents, notamment pour moteur de recherche, caractérisé en ce qu'il comporte une unité centrale de traitement comprenant des moyens de comparaison d'éléments extraits de chaque document avec des éléments caractéristiques de différents thèmes, affectés chacun d'un coefficient représentatif de la pertinence de cet élément pour un thème correspondant, et des moyens de calcul de la valeur d'au moins une caractéristique représentative de la pertinence d'un thème pour ce document, à partir des coefficients desdits éléments caractéristiques qu'il contient, pour décider si ce document porte ou non sur ce thème, ladite unité centrale étant raccordée à des moyens de stockage de documents classés par thèmes, interrogeables à partir de thèmes contenus dans une requête, et en ce qu'il comporte des moyens de calcul de la fréquence de l'élément dans les documents sélectionnés portant sur ce thème, des moyens de calcul de la fréquence de l'élément dans les documents sélectionnés ne portant pas sur ce thème, et des moyens de calcul du rapport entre les fréquences calculées.

Un autre objet de l'invention est un moteur de recherche de documents sur un réseau informatique, comprenant un module d'indexation pour la création et la mise à jour de bases de données thématiques, à partir de documents récupérés sur le réseau informatique, et un module d'interrogation des bases de données adaptées pour fournir des références de documents correspondant à une requête reçue en entrée, caractérisé en ce qu'il comporte en outre un module de classification thématique tel que défini ci-dessus, associé au module d'indexation.

D'autres caractéristiques et avantages ressortiront de la description suivante, donnée uniquement à titre d'exemple, et faite en référence aux dessins annexés sur lesquels :

- la Fig. 1 est un organigramme montrant les principales phases de fonctionnement d'un module de classification thématique de documents selon l'invention, pour moteur de recherche ;
- la Fig. 2 est un organigramme illustrant la méthode de calcul des éléments caractéristiques de thèmes ; et

- la Fig. 3 est un organigramme montrant la méthode de calcul des thèmes d'un document.

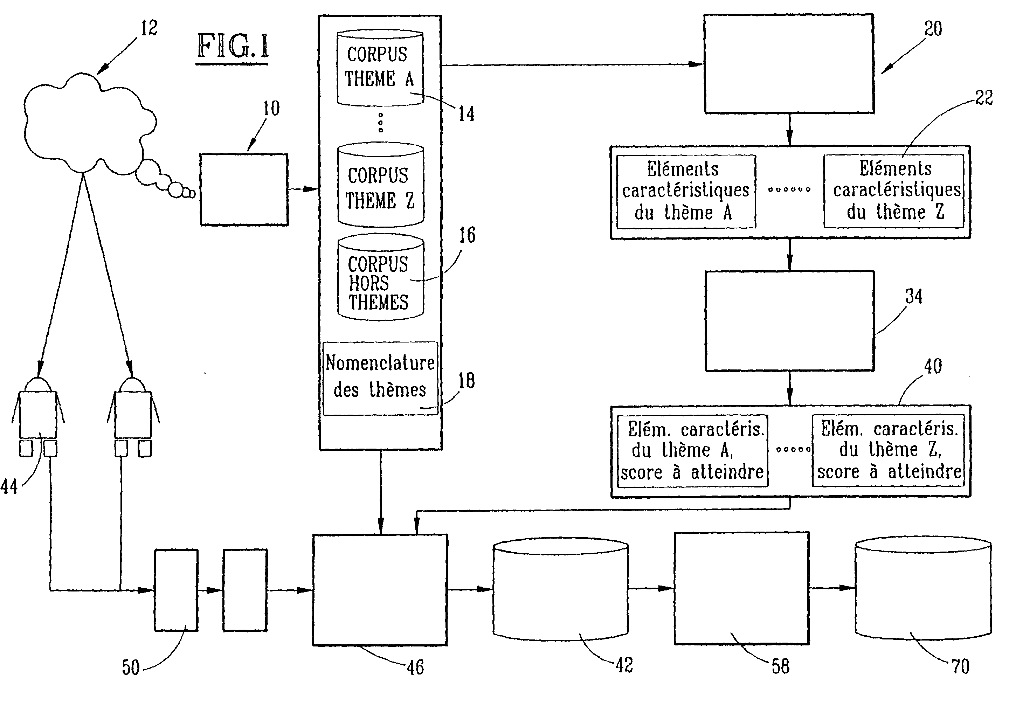

Sur la Fig. 1, on a représenté les principales phases du procédé de classification thématique de documents selon l'invention.

Il est destiné à permettre le classement de documents récupérés sur un réseau informatique, en fonction de thèmes qui y sont abordés. Par exemple, il peut être mis en oeuvre au sein d'un moteur de recherche.

Dans ce cas, il intervient dès le processus d'indexation, mais également au cours du traitement d'une requête formulée par un utilisateur, pour permettre de déterminer tous les thèmes abordés dans cette requête.

On conçoit toutefois que d'autres applications peuvent être envisagées. Par exemple, ce procédé peut être mis en oeuvre au niveau d'un point d'accès d'un réseau de postes utilisateurs à un réseau Internet, afin de déterminer la nature des pages Web récupérées par les utilisateurs et interdire ou autoriser, par filtrage des requêtes, certains thèmes, par exemple, contraires à l'ordre public et aux bonnes moeurs, ou encore calculer des statistiques sur les centres d'intérêt des utilisateurs.

Pour procéder à cette classification, le procédé comporte deux phases distinctes, à savoir une première phase préalable d'acquisition du vocabulaire thématique de corpus de documents et d'affectation, à chaque mot du vocabulaire, d'une valeur de seuil à partir de laquelle on décide qu'un document, contenant ce mot, porte sur le thème correspondant, ainsi qu'une deuxième phase de classification proprement dite, au cours de laquelle un document récupéré sur le réseau est automatiquement classifié en fonction des éléments caractéristiques qu'il contient.

Par exemple cette deuxième phase intervient périodiquement, seuls des documents nouvellement créés ou modifiés étant classifiés.

La description de la première phase d'acquisition du vocabulaire thématique va maintenant être en référence aux Figs. 1 à 3.

Comme on le voit sur la Fig. 1, cette phase débute par une étape 10 de sélection manuelle, à partir d'un ensemble 12 d'échantillons (ou corpus) de documents représentatifs de chacun des thèmes A à Z utilisés pour classer les documents au cours de la deuxième phase.

Ainsi, à l'issu de cette étape 10 de sélection manuelle, on dispose d'un ensemble de corpus de documents, tels que 14, portant chacun sur un thème (thème A,... thème Z). Bien entendu l'étape de sélection peut également être effectuée par tout moyen autre que manuel.

Au cours de cette étape 10 de sélection, on crée également un corpus 16 de documents ne portant sur aucun des thèmes A à Z et on définit une nomenclature 18 des thèmes A à Z, c'est à dire la liste de ces thèmes associés à des sous-thèmes s'y rapportant.

Lors de l'étape 20 suivante, ces éléments sont présentés en entrée d'un module de classification thématique en vue d'extraire de chaque document les éléments caractéristiques de chaque thème et de les affecter chacun d'un coefficient représentatif de leur pertinence vis à vis d'un thème correspondant.

Par exemple ce module de classification thématique se présente sous la forme d'un module spécifique d'un moteur de recherche, associé à un module d'indexation réalisant la création ou la mise à jour des bases de données thématiques.

Il peut également être agencé sous la forme d'un module spécifique prévu au niveau d'un point d'accès à un réseau informatique, en particulier à un réseau Internet.

Ce module comprend les moyens logiciels appropriés pour réaliser l'extraction des éléments caractéristiques de chaque thème et pour les affecter d'un coefficient représentatif de leur pertinence vis à vis de différents thèmes, comme cela va être décrit en détail par la suite.

Au cours de cette étape 20, le module de classification extrait, de chaque document sélectionné, les éléments caractéristiques de chaque thème.

Cette extraction s'effectue en utilisant un outil informatique de type classique. Il ne sera donc pas décrit par la suite.

On dispose à l'issu de cette étape 20, de listes d'éléments caractéristiques des thèmes A à Z, telles que 22.

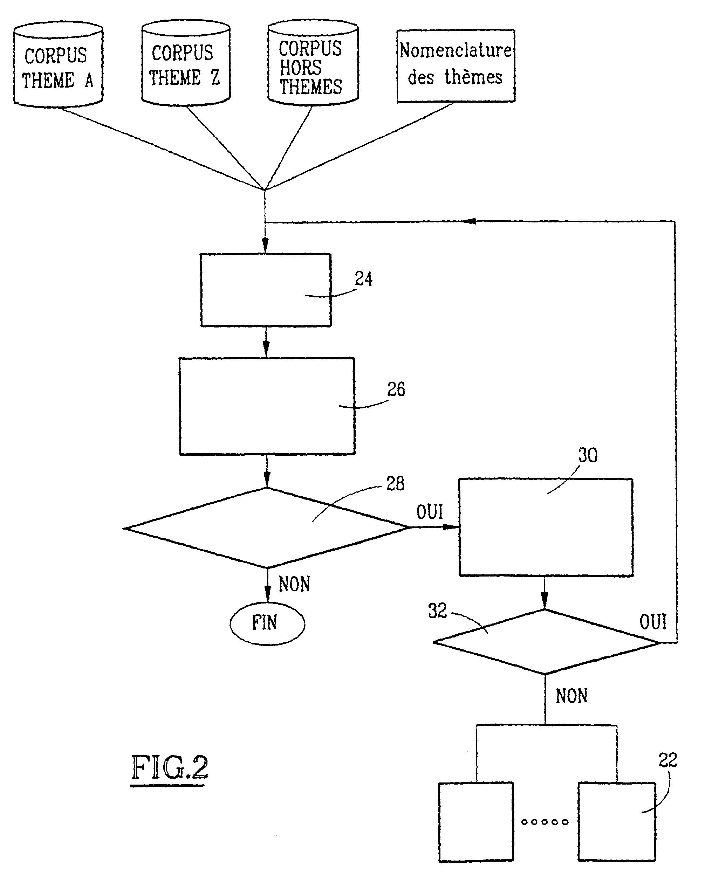

En référence à la Fig. 2, cette procédure d'identification du vocabulaire caractéristique de chaque thème s'effectue successivement pour chaque élément extrait des documents de chacun des corpus 14 et 16.

Au cours d'une première étape 24, on vide un tableau regroupant l'ensemble des thèmes candidats, c'est à dire les thèmes susceptibles de correspondre à l'élément extrait.

Lors de l'étape 26 suivante, on procède, pour chaque thème, à un calcul d'un coefficient R représentatif de la pertinence de cet élément vis à vis de ce thème.

Pour procéder à ce calcul, on calcule tout d'abord la fréquence p de l'élément dans les documents portant sur ce thème, ainsi que la fréquence q de cet élément dans les documents ne portant pas sur ce thème.

On procède ensuite au calcul du coefficient R, constitué par le rapport entre ces fréquences p et q.

Lors de l'étape 28 suivante, on vérifie si les caractéristiques p, q et R se situent à l'intérieur de limites prédéterminées.

Si tel n'est pas le cas, on procède au traitement de l'élément suivant.

Si tel est le cas, on ajoute le thème dans le tableau des thèmes candidats avec un score égal au coefficient R (étape 30).

S'il reste des éléments à traiter (étape 32), la procédure retourne à l'étape 24 précédente.

Dans le cas contraire, cette procédure s'achève.

On notera que, de préférence, après remplissage du tableau des thèmes candidats, celui-ci est trié par ordre décroissant des scores R. On notera également que pour tout thème candidat, jusqu'à un nombre maximum voulu, on ajoute un nouvel élément récupéré dans la liste des éléments caractéristiques de ce thème, en se limitant à un nombre maximum voulu des n meilleurs éléments par thème choisi en fonction de leur score R.

En se référant à nouveau à la Fig. 1, lors de l'étape 34 suivante, le module de classification thématique procède à un calcul automatique, au moyen d'un algorithme approprié, d'une valeur de seuil correspondant à un seuil minimum à atteindre pour déterminer si un document comprenant un élément caractéristique d'un thème porte ou non sur ce thème.

Pour procéder à ce calcul, le module de classification procède tout d'abord à un calcul de la valeur moyenne $R_{moy}$ des rapports R des éléments caractéristiques de chaque thème (étape 36).

Il procède ensuite au calcul de la valeur de seuil score - $seuil_{thème}$, selon la relation suivante :

$$\text{score - seuil}_{thème} = (R_{moy})n\text{thème}$$

dans laquelle nthème désigne un nombre prédéterminé choisi par exemple égal à 5 pour la plupart des thèmes.

On voit alors sur la Fig. 1, qu'à l'issu de ce calcul automatique des scores à atteindre, on dispose de listes, telles que 40, d'éléments caractéristiques de chaque thème A à Z, affectés chacun d'un score à atteindre, c'est à dire d'une valeur de seuil à partir de laquelle on considère qu'un document porte sur ce thème.

Après cette phase d'acquisition du vocabulaire thématique, réalisée à partir de corpus de documents représentatifs de thèmes, la deuxième phase de classification thématique proprement dite peut être effectuée, dans le but de constituer des bases de données thématiques, désignées par la référence numérique générale 42, à partir de documents collectés automatiquement sur le réseau informatique par des robots, tels que 44.

Ces documents sont présentés en entrée du module de classification thématique, qui reçoit également une indication de la nomenclature 18 des thèmes, ainsi que les éléments disponibles à l'issu de l'étape 34 mentionnée précédemment. Ce module procède à un calcul automatique des thèmes sur lesquels porte le document (étape 46).

Pour ce faire, il comporte tous les moyens logiciels appropriés pour réaliser les opérations mentionnées ci-dessous.

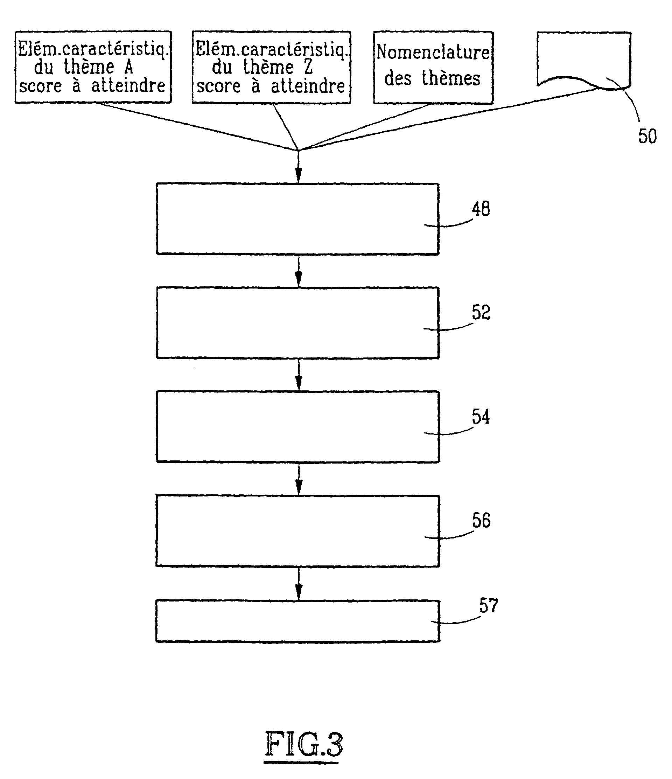

En référence à la Fig. 3, au cours d'une première étape 48 de cette procédure, le module d'indexation extrait de chaque document 50 récupéré par les robots 44, les éléments caractéristiques de thèmes qu'il contient.

Cette étape s'effectue, par exemple, en utilisant une table de hachage, pour rechercher rapidement dans les listes d'éléments caractéristiques les éléments contenus dans chaque document.

Après extraction de ces éléments on identifie, parmi ceux-ci, les éléments caractéristiques de thèmes contenus dans les listes 40.

Pour chaque élément identifié, le module de classification procède ensuite à un calcul d'une valeur caractéristique représentative de la pertinence de chaque thème pour ce document, à partir du coefficient affecté à cet élément.

Pour ce faire, lors de l'étape 52 suivante, une variable "score-thème" , représentative du score du document dans un thème donné est positionnée à 1, et ce pour tous les thèmes.

Ensuite, pour tout élément du document, et pour chaque thème de l'arborescence des thèmes, si l'élément se situe parmi la liste des éléments caractéristiques du thème, on lit le score R, c'est à dire la valeur du rapport des fréquences pour chaque élément et on multiplie les valeurs lues du score R pour chacun de ces éléments.

Le résultat de cette multiplication est ensuite affecté à la valeur de la caractéristique score - thème(étape 54).

On décide alors que les thèmes reconnus dans le document 50 sont ceux dont la caractéristique score - thème atteint ou dépasse le score à atteindre pour ces thèmes (étape 56).

On dispose alors, à l'issu de cette procédure, de l'ensemble 57 des thèmes sur le ou lesquels porte le document 50 récupéré.

On conçoit donc que cette procédure de calcul automatique des thèmes des documents récupérés par les robots 44 permet au module d'indexation d'un moteur de recherche de classer ces documents en fonction des thèmes abordés et de constituer les bases 42 de données thématiques.

Une telle procédure de calcul automatique de thème de documents peut également être utilisée pour déterminer les thèmes abordés dans une requête formulée par un utilisateur.

Pour ce faire, à partir de cette requête, pour chacun des éléments du vocabulaire d'interrogation utilisés dans la requête, on calcule les coefficients caractéristiques de cet élément par rapport à chacun des thèmes connus et l'on associe à chacun de ces éléments les coefficients et thèmes de telle manière que les coefficients atteignent une valeur minimale.

Lors de la recherche des entrées d'index correspondant aux éléments d'une requête, c'est à dire pour le calcul des résultats, on accède ainsi directement au thème lié aux éléments ainsi qu'à leur coefficient, que l'on combine par multiplication, selon la même procédure que celle décrite plus haut, afin de déterminer un classement des thèmes liés à la requête entière.

On conçoit donc que cette procédure permet de proposer à un utilisateur de préciser sa requête, par exemple, lorsque celle-ci est formulée de façon vague.

On conçoit également que cette procédure, qui permet d'identifier les thèmes contenus dans une requête, rend possible d'effectuer une surveillance des requêtes utilisateurs afin d'établir des calculs statistiques permettant de définir des profils d'utilisateurs en fonction des requêtes.

On saisira alors que l'invention qui vient d'être décrite peut être utilisée pour la recherche de thèmes contenus dans des pages récupérées sur un réseau informatique, pour la détermination de thèmes contenus dans une requête formulée par un utilisateur et, à partir de cette détermination, pour le filtrage des requêtes et également des pages récupérées, afin d'interdire la formulation de requête ou la récupération de pages portant sur des thèmes prédéterminés interdits, et pour l'élaboration des profils d'utilisateurs.

On notera cependant que dans le cas de la détermination des thèmes contenus dans une requête, cette dernière est considérée comme constituant un document présenté en entrée du module de classification thématique selon l'invention.

L'invention n'est pas limitée au mode de réalisation envisagée.

En effet, il est également possible, en variante, de régler manuellement la valeur de seuil à partir de laquelle on décide qu'un document porte ou non sur un thème donné.

**Revendications**

1.  Procédé de classification thématique de documents, notamment pour la constitution ou la mise à jour de bases de données thématiques pour moteur de recherche, qui comporte les étapes suivantes :

    -   on sélectionne (10) manuellement et/ou automatiquement un échantillon de documents représentatifs de chaque thème ;
    -   on identifie (20) automatiquement, dans les documents sélectionnés, des éléments caractéristiques de chaque thème;
    -   on affecte (26) automatiquement, à chaque élément identifié, un coefficient (R) représentatif de la pertinence de cet élément vis à vis du thème correspondant ;
    -   pour chaque document (50) à classifier, on identifie (46) lesdits éléments caractéristiques de chaque thème qu'il contient et, pour chaque thème qui leur correspond, on calcule, à partir du coefficient affecté à *ces* éléments, la valeur d'une caractéristique représentative de la pertinence du thème pour ce document (50), pour décider (56) si ce document porte ou non sur ce thème, lesdites étapes d'identification et de calcul étant réalisées automatiquement pour chaque document récupéré sur un réseau informatique ;
    -   on classe automatiquement les documents récupérés en fonction des thèmes qui y sont abordés ; et
    -   l'on stocke automatiquement les documents classés par thèmes dans des bases de données interrogeables à partir de thèmes contenus dans une requête ;

    et en ce que l'étape d'affectation dudit coefficient à chaque élément identifié comprend les étapes suivantes, pour chaque thème :

    -   calcul (26) automatique de la fréquence de l'élément dans les documents sélectionnés portant sur ce thème ;
    -   calcul (26) automatique de la fréquence de l'élément dans les documents sélectionnés ne portant pas sur ce thème ; et
    -   calcul (26) automatique du rapport entre les fréquences calculées.

2.  Procédé selon la revendication 1, **caractérisé en ce qu'**il comporte en outre une étape automatique de tri des thèmes selon une arborescence de thèmes et par ordre décroissant des coefficients.

3.  Procédé selon la revendication 1 ou 2, **caractérisé en ce que** l'étape de calcul (52) automatique de la caractéristique représentative de la pertinence du thème d'un document à classifier comprend les étapes suivantes, pour chaque thème :

- on lit la valeur du rapport (R) desdites fréquences de chaque élément représentatif du thème extrait du document ;
- on multiplie les valeurs lues ; et
- on affecte (54) le résultat de cette multiplication à la valeur de ladite caractéristique.

4. Procédé selon l'une quelconque des revendications 1 à 3, **caractérisé en ce que** l'on décide (56) automatiquement que le document porte sur un thème si la valeur de ladite caractéristique représentative de la pertinence du thème pour ce document est supérieure à une valeur de seuil.

5. Procédé selon la revendication 4, **caractérisé en ce que** la valeur de seuil est élaborée automatiquement (34), pour chaque thème, à partir desdits rapports de fréquence, selon la relation suivante :

$$\text{score - seuil}_{\text{thème}} = (R_{moy})\text{nthème}$$

dans laquelle :

score - seuil$_{\text{thème}}$ désigne la valeur de seuil
$R_{moy}$ représente la valeur moyenne des rapports de fréquentes R des éléments du thème et,
nthème désigne un nombre prédéterminé.

6. Procédé selon la revendication 4, **caractérisé en ce que** la valeur de seuil est réglée manuellement.

7. Procédé selon l'une quelconque des revendications 1 à 6, **caractérisé en ce que** les étapes (46) d'identification automatique des éléments caractéristiques de chaque thème contenu dans un document (50) sont réalisées au moyen d'une table de hachage (48).

8. Procédé selon l'une quelconque des revendications 1 à 7, **caractérisé en ce que** l'on calcule automatiquement, pour chaque élément de vocabulaire d'une requête formulée par l'utilisateur, des coefficients caractéristiques de l'élément par rapport à chaque thème connu et l'on associe à chaque élément les coefficients et les thèmes correspondant, de sorte que lesdits coefficients atteignent une valeur minimale.

9. Module de classification thématique de documents (50), notamment pour moteur de recherche, qui comporte une unité centrale de traitement comprenant des moyens de comparaison d'éléments extraits de chaque document avec des éléments caractéristiques de différents thèmes, affectés chacun d'un coefficient (R) représentatif de la pertinence de cet élément pour un thème correspondant, et des moyens de calcul de la valeur d'au moins une caractéristique représentative de la pertinence d'un thème pour ce document, à partir des coefficients desdits éléments caractéristiques qu'il contient, pour décider si ce document (50) porte ou non sur ce thème, ladite unité centrale étant raccordée à des moyens de stockage de documents classés par thèmes, interrogeables à partir de thèmes contenus dans une requête, et en ce qu'il comporte des moyens de calcul de la fréquence de l'élément dans les documents sélectionnés portant sur ce thème, des moyens de calcul de la fréquence de l'élément dans les documents sélectionnés ne portant pas sur ce thème, et des moyens de calcul du rapport entre les fréquences calculées.

10. Utilisation d'un module de classification thématique de documents selon la revendication 9 pour la détermination de thèmes contenus dans une requête formulée par un utilisateur.

11. Utilisation d'un module de classification thématique de documents selon la revendication 9 pour la détermination de thèmes contenus dans des pages récupérées sur un réseau informatique ou dans une requête formulée par un utilisateur et le filtrage des documents récupérée pour interdire la consultation de pages portant sur un ou des thèmes prédéterminés.

12. Utilisation d'un module de classification thématique de documents selon la revendication 9 pour la détermination de thèmes contenus dans une requête formulée par un utilisateur et l'élaboration de profils d'utilisa-teurs à partir des thèmes sur lesquels porte la requête.

13. Moteur de recherche de documents sur un réseau informatique, comprenant un module d'indexation pour la création et la mise à jour de bases de données thématiques, à partir de documents récupérés sur le réseau informatique, et un module d'interrogation des bases de données thématiques adaptées pour fournir des références de documents correspondant à une requête reçue en entrée, qui comporte en outre un module de classification thématique selon la revendication 9, associé au module d'indexation.

**Patentansprüche**

1.  Verfahren zum thematischen Klassifizieren von Dokumenten, insbesondere zum Erstellen oder Aktualisieren von thematischen Datenbanken für eine Suchmaschine, mit folgenden Schritten:

    -   eine Probe von Dokumenten, die für jedes Thema repräsentativ sind, wird manuell und/oder automatisch ausgewählt (10);
    -   in den ausgewählten Dokumenten werden charakteristische Elemente jedes Themas automatisch identifiziert (20);
    -   jedem identifizierten Element wird automatisch ein Koeffizient (R) zugewiesen (26), der die Relevanz dieses Elements bezüglich des betreffenden Themas darstellt;
    -   für jedes zu klassifizierende Dokument (50) werden zu jedem im Dokument enthaltenen Thema die hierfür charakteristischen Elemente identifiziert (46), und für jedes ihnen entsprechende Thema wird anhand des den Elementen zugewiesenen jeweiligen Koeffizienten der Wert einer Kenngröße, die die Relevanz des Themas für das Dokument (50) darstellt, berechnet, um zu entscheiden (56), ob das Dokument das Thema behandelt oder nicht, wobei der Identifizierungsschritt und der Berechnungsschritt für jedes in einem Datennetz aufgefundene Dokument automatisch erfolgen;
    -   die aufgefundenen Dokumente werden in Abhängigkeit von den darin angesprochenen Themen automatisch klassifiziert; und
    -   die klassifizierten Dokumente werden automatisch nach Themen in Datenbanken gespeichert, die anhand von in einer Suchanfrage enthaltenen Themen abfragbar sind;

    und wobei der Schritt, in dem jedem identifizierten Element der Koeffizient zugewiesen wird, für jedes Thema folgende Schritte aufweist:

    -   automatisches Berechnen (26) der Häufigkeit des Elements in den ausgewählten Dokumenten, die das Thema behandeln;
    -   automatisches Berechnen (26) der Häufigkeit des Elements in den ausgewählten Dokumenten, die das Thema nicht behandeln;
    -   automatisches Berechnen (26) des Verhältnisses zwischen den berechneten Häufigkeiten.

2.  Verfahren nach Anspruch 1, **dadurch gekennzeichnet, dass** es außerdem einen automatischen Schritt zum Sortieren der Themen gemäß einem Themenbaum und in abnehmender Reihenfolge der Koeffizienten aufweist.

3.  Verfahren nach Anspruch 1 oder 2, **dadurch gekennzeichnet, dass** der Schritt zum automatischen Berechnen (52) der Kenngröße, die die Relevanz des Themas für ein zu klassifizierendes Dokument darstellt, für jedes Thema folgende Schritte aufweist:

    -   der Wert des Verhältnisses (R) der Häufigkeiten jedes Elements, das für das dem Dokument entnommene Thema repräsentativ ist, wird gelesen;
    -   die gelesenen Werte werden multipliziert; und
    -   das Ergebnis der Multiplikation wird dem Wert der Kenngröße zugewiesen (54).

4.  Verfahren nach einem der Ansprüche 1 bis 3, **dadurch gekennzeichnet, dass** automatisch entschieden wird (56), dass das Dokument ein Thema behandelt, wenn der Wert der die Relevanz des Themas für das Dokument darstellenden Kenngröße größer als ein Schwellwert ist.

5.  Verfahren nach Anspruch 4, **dadurch gekennzeichnet, dass** für jedes Thema der Schwellwert automatisch anhand der Häufigkeitsverhältnisse gemäß folgender Beziehung ermittelt wird (34) :

$$\text{Kenngröße \_ Schwellwert}_{\text{Thema}} = (R_{\text{Durchschnitt}})n\text{Thema,}$$

wobei

Kenngröße _ Schwellwert$_{Thema}$ den Schwellwert bezeichnet,
R$_{Durchschnitt}$ den Durchschnittswert der Häufigkeitsverhältnisse R der Elemente des Themas darstellt, und
nThema eine vorgegebene Zahl bezeichnet.

**6.** Verfahren nach Anspruch 4, **dadurch gekennzeichnet, dass** der Schwellwert manuell eingestellt wird.

**7.** Verfahren nach einem der Ansprüche 1 bis 6, **dadurch gekennzeichnet, dass** die Schritte (46) zum automatischen Identifizieren der Elemente, die für jedes in einem Dokument (50) enthaltene Thema charakteristisch sind, mittels einer Zerstückelungstabelle (48) erfolgen.

**8.** Verfahren nach einem der Ansprüche 1 bis 7, **dadurch gekennzeichnet, dass** für jedes Vokabelelement einer vom Nutzer formulierten Suchanfrage automatisch Koeffizienten berechnet werden, die für das Element bezüglich jedes bekannten Themas charakteristisch sind, und dass jedem Element die betreffenden Koeffizienten und Themen in der Weise zugeordnet werden, dass die Koeffizienten einen Mindestwert erreichen.

**9.** Modul zur thematischen Klassifizierung von Dokumenten (50), insbesondere für eine Suchmaschine, mit einer zentralen Verarbeitungseinheit, die eine Einrichtung zum Vergleichen von aus jedem Dokument entnommenen Elementen mit für verschiedene Themen charakteristischen Elementen, die jeweils mit einem die Relevanz des Elements für ein zugehöriges Thema darstellenden Koeffizient (R) versehen sind, und eine Einrichtung zum Berechnen des Werts wenigstens einer die Relevanz eines Themas für das Dokument darstellenden Kenngröße anhand der Koeffizienten der in ihm enthaltenen charakteristischen Elemente aufweist, um zu entscheiden, ob das Dokument (50) das Thema behandelt oder nicht, wobei die Zentraleinheit mit einer Einrichtung zum Speichern von themenweise klassifizierten Dokumenten verbunden ist, die anhand von in einer Suchanfrage enthaltenen Themen abfragbar ist, und wobei das Modul eine Einrichtung zum Berechnen der Häufigkeit des Elements in den das Thema behandelnden ausgewählten Dokumenten, eine Einrichtung zum Berechnen der Häufigkeit des Elements in den das Thema nicht behandelnden ausgewählten Dokumenten, und eine Einrichtung zum Berechnen des Verhältnisses zwischen den berechneten Häufigkeiten enthält.

**10.** Verwendung eines Moduls zur thematischen Klassifizierung von Dokumenten nach Anspruch 9 zur Bestimmung von Themen, die in einer von einem Nutzer formulierten Suchanfrage enthalten sind.

**11.** Verwendung eines Moduls zur thematischen Klassifizierung von Dokumenten nach Anspruch 9 zur Bestimmung von Themen, die auf in einem Datennetz gefundenen Seiten oder in einer von einem Nutzer formulierten Suchanfrage enthalten sind, und zur Filterung der gefundenen Dokumente, um den Besuch von Seiten zu unterbinden, die ein oder mehrere vorgegebene Themen behandeln.

**12.** Verwendung eines Moduls zur thematischen Klassifizierung von Dokumenten nach Anspruch 9 zur Bestimmung von Themen, die in einer von einem Nutzer formulierten Suchanfrage enthalten sind, und zur Ausarbeitung von Nutzerprofilen anhand von Themen, auf die sich die Anfrage bezieht.

**13.** Maschine zum Suchen von Dokumenten in einem Datennetz, mit einem Indexierungsmodul zur Erstellung und Aktualisierung von thematischen Datenbanken anhand von in dem Datennetz gefundenen Dokumenten und mit einem Modul zum Abfragen der thematischen Datenbanken, die ausgebildet sind, Verweise zu Dokumenten liefern, die einer als Eingangssignal empfangenen Suchanfrage entsprechen, wobei die Suchmaschine außerdem ein Modul zur thematischen Klassifizierung nach Anspruch 9 aufweist, das dem Indexierungsmodul beigeordnet ist.

**Claims**

**1.** Method of classifying documents by subject, notably for setting up or updating subject databases for a search engine, which comprises the following steps:

manually and/or automatically selecting (10) a sample of documents representing each subject;
automatically identifying (20) elements characteristic of each subject in the documents selected;
automatically assigning (26) to each element identified a coefficient (R) representing the relevance of this element to the corresponding subject;
for each document (50) which is to be classified, identifying (46) the elements characteristic of each subject which it contains, and, for each subject which corresponds thereto, calculating, from the coefficient assigned to these elements, the value of a characteristic which is representative of the relevance of the subject to this document (50), in order to decide (56) whether or not this document relates to this subject, said steps of identification and calculation being carried out automatically for each document retrieved from a data network; automatically classifying the documents retrieved according to the subjects dealt with therein; and automatically storing the documents classified by subject in data bases which can be interrogated on the basis of subjects contained in a request;

and wherein the step of assigning said coefficient to each element identified comprises the following steps for each subject :

automatically calculating (26) the frequency of the element in the selected documents relating to this subject;
automatically calculating (26) the frequency of the element in the selected documents which do not relate to this subject; and
automatically calculating (26) the ratio between the frequencies calculated.

2. Method according to claim 1, **characterised in that** it further comprises a step of automatically sorting the subjects according to a subject tree in a decreasing order of coefficients.

3. Method according to claim 1 or 2, **characterised in that** the step of automatically calculating (52) the characteristic which is representative of the relevance of the subject of a document which is to be classified comprises the following steps, for each subject:

reading off the value of the ratio (R) of said frequencies of each element representing the subject extracted from the document;
multiplying the values read off; and
assigning (54) the results of this multiplication to the value of said characteristic.

4. Method according to one of claims 1 to 3, **characterised in that** it is automatically decided (56) that the document relates to a subject if the value of said characteristic which is representative of the relevance of the subject to this document is greater than a threshold value.

5. Method according to claim 4, **characterised in that** the threshold value is worked out automatically (34), for each subject, from said frequency ratios, according to the following equation:

$$\text{score - threshold}_{subject} = (R_{mean})\text{nth}$$

wherein:

score - threshold$_{subject}$ denotes the threshold value ($R_{mean}$) denotes the mean value of the frequency ratios R of the elements of the subject and
nth denotes a predetermined number.

6. Method according to claim 4, **characterised in that** the threshold value is adjusted manually.

7. Method according to any one of claims 1 to 6, **characterised in that** the steps (46) of automatically identifying the elements characteristics of each subject contained in a document (50) are carried out using a hash table (48).

8. Method according to any one of claims 1 to 7, **characterised in that**, for each element of vocabulary of a request formulated by the user, coefficients characteristic of the element in relation to each known subject are calculated automatically and the corresponding coefficients and subjects are associated with each element so that said coefficients attain a minimum value.

9. Module for classifying documents by subject (50), notably for a search engine, which comprises a central processor unit having means for comparing elements extracted from each document with elements characteristic of different subjects, each being assigned a coefficient (R) representative of the relevance of said element for a corresponding subject, and means for calculating the value of at least one characteristic representative of the relevance of a subject to this document, from the coefficients of said characteristic elements which it contains, in order to decide whether or not this document (50) relates to this subject, said central unit being connected to means for storing documents classified by subject, which can be interrogated on the basis of subjects contained in a request, and in that it comprises means for calculating the frequency of the element in the selected documents relating to this subject, means for calculating the frequency of the element in the selected documents which do not relate to this subject, and means for calculating the ratio between the frequencies calculated.

10. Use of a module for classifying documents by subject according to claim 9, for determining subjects contained in a request formulated by a user.

11. Use of a module for classifying documents by subject according to claim 9, for determining subjects contained in pages retrieved from a data network or in a request formulated by a user and filtering the documents retrieved in order to deny access to pages relating to one or more predetermined subjects.

12. Use of a module for classifying documents by subject according to claim 9, for determining subjects contained in a request formulated by a user and developing user profiles from the subjects to which the request relates.

13. Search engine for retrieving documents from a data network, comprising an indexing module for creating and updating subject data bases from documents retrieved from the data network, and a module for interrogating subject data bases adapted to supply references to documents corresponding to a request which has been input, which further comprises a module for classification by subject according to claim 9 associated with the indexing module.

FIG.1

**12**

**10**

CORPUS
THEME A        **14**

⋮

CORPUS
THEME Z

CORPUS
HORS
THEMES        **16**

Nomenclature
des thèmes    **18**

**20**

**22**
| Eléments caractéristiques du thème A | ⋯⋯ | Eléments caractéristiques du thème Z |

**34**

**40**
| Elém. caractéris. du thème A, score à atteindre | ⋯⋯ | Elém. caractéris. du thème Z, score à atteindre |

**44**

**50**        **46**        **42**        **58**        **70**

CORPUS
THEME A

CORPUS
THEME Z

CORPUS
HORS
THEMES

Nomenclature
des thèmes

24

26

28

OUI

30

NON

FIN

32

OUI

NON

22

○ ○ ○ ○ ○

## FIG.2

Elém.caractéristiq.
du thème A
score à atteindre

Elém.caractéristiq.
du thème Z
score à atteindre

Nomenclature
des thèmes

50

48

52

54

56

57

FIG.3